**Europäisches Patentamt**

**European Patent Office**

**Office européen des brevets**

(19)

(11) Veröffentlichungsnummer: **0 300 256 B1**

# EUROPÄISCHE PATENTSCHRIFT

(12)

(45) Veröffentlichungstag der Patentschrift:
15.05.91 Patentblatt 91/20

(51) Int. Cl.⁵: **B60D 1/26**

(21) Anmeldenummer: **88110637.1**

(22) Anmeldetag: **04.07.88**

(54) Einrichtung zum Fernbetätigen einer automatischen Anhängekupplung.

(30) Priorität: **17.07.87 DE 3723709**

(43) Veröffentlichungstag der Anmeldung:
**25.01.89 Patentblatt 89/04**

(45) Bekanntmachung des Hinweises auf die
Patenterteilung:
**15.05.91 Patentblatt 91/20**

(84) Benannte Vertragsstaaten:
**CH DE FR IT LI NL SE**

(56) Entgegenhaltungen:
EP-A- 0 149 453
DE-A- 2 458 977
DE-B- 1 009 495
DE-C- 812 032
US-A- 3 889 979

(73) Patentinhaber: **Ringfeder G.m.b.H.**
**Duisburger Strasse 145**
**W-4150 Krefeld-Uerdingen (DE)**

(72) Erfinder: **Bonacker, Peter Dipl.-Ing.**
**Am Gieselberg 35**
**W-4174 Straelen (DE)**
Erfinder: **Rossbach, Joachim, Dipl.-Ing.**
**Piepersweg 69**
**W-4050 Mönchengladbach (DE)**
Erfinder: **Schäfer, Horst-Dieter Dipl.-Ing.**
**Süchtelner Strasse 149**
**W-4156 Willich 2 (DE)**
Erfinder: **Vandeweerd, Rolf**
**Teutonenstrasse 3**
**W-4130 Moers 1 (DE)**
Erfinder: **Wensing, Udo Dipl.-Ing.**
**Holderstrasse 22**
**W-4200 Oberhausen 11 (DE)**

Beschreibung

Die Erfindung betrifft eine Einrichtung zum Fernbetätigen einer automatischen Anhängekupplung, deren Kuppelbolzen gegenüber einem unbeabsichtigten Anheben durch zwei unabhängig voneinander, jeweils formschlüssig wirkende Sicherungen arretiert ist, wobei die erste Sicherung durch eine kerbenförmige Rast des Kuppelbolzens und einen bei geschlossener Kupplung in diese Rast eingreifenden Sperr- und Betätigungshebel und die zweite Sicherung durch einen federbelasteten, mit der Oberseite des geschlossenen Kuppelbolzens zusammenwirkenden Sicherungsriegel gebildet sind.

Eine Anhängekupplung mit den vorgenannten Merkmalen ist durch die DE-C-812 032 bekannt. Die beiden unabhängig voneinander, jeweils formschlüssig wirkenden Sicherungen verhindern ein unbeabsichtigtes Anheben des Kuppelbolzens sowohl während der Fahrt als auch beim An- und Abkuppeln des Anhängers im Stillstand. Ein gewolltes Anheben des Kuppelbolzens, d. h., ein Öffnen der Kupplung, ist nur möglich, wenn zunächst die zweite Sicherung aufgehoben und anschließend die erste Sicherung durch Drehen des Sperr- und Betätigungshebels gelöst wird. Das Bedienen dieser bekannten Kupplung ist bequem, falls sie in einem gut zugänglichen Bereich des Fahrzeuges angeordnet ist, beispielsweise an dessen Rückseite. Das Bedienen ist schwieriger, wenn die Kupplung unterhalb eines Fahrzeuges mit niedriger Ladefläche und in einem größeren Abstand von der Fahrzeugrückseite angebracht ist.

Der Erfindung liegt die Aufgabe zugrunde, für eine Anhängekupplung der gattungsgemäßen Art eine möglichst einfach gestaltete, zuverlässig arbeitende und sicherheitstechnisch einwandfreie Einrichtung zum Fernbetätigen zu schaffen.

Diese Aufgabe wird erfindungsgemäß dadurch gelöst, daß der Sicherungsriegel zum Aufheben seiner Wirkverbindung mit dem Kuppelbolzen mit einer mechanischen Lösevorrichtung verbunden ist, wobei der Sperr- und Betätigungshebel – nur bei gelöstem Sicherungsriegel – durch einen pneumatischen Antrieb aus seinem Eingriff in die kerbenförmige Rast des Kuppelbolzens trennbar und unter Mitnahme des Kuppelbolzens nach oben schwenkbar ist.

Durch die DE-A-24 58 977 ist eine Anhängekupplung mit einer Sicherung für den Kupplungsbolzen bekannt, die aus einer kerbenförmigen Rast des Kuppelbolzens und einen in diese Rast eingreifenden Sperr- und Betätigungshebel besteht. Der mit einem pneumatischen Antrieb zum Fernbedienen verbundene Sperr- und Betätigungshebel ist mit Hilfe des Antriebs aus seinem Eingriff in die kerbenförmige Rast trennbar und unter Mitnahme des Kuppelbolzens nach oben schwenkbar. Bei dieser Schwenkbewegung gelangt ein durch den Sperr- und Betätigungshebel gesteuerter Kontrollbolzen zwangsläufig in eine vom Fahrersitz aus erkennbare Stellung und zeigt auf diese Weise an, daß die Kupplung geöffnet ist. Abweichend von Gattung und Lösung des Erfindungsgegenstandes hat die Anhängekupplung gemäß DE-A-24 58 977 nur die genannte eine Sicherung ; der Kontrollbolzen bildet keine zweite Sicherung, die ein ungewolltes Öffnen der Kupplung verhindert, sondern lediglich eine optische Anzeige über den Funktionszustand (geschlossen bzw. geöffnet) der Anhängekupplung.

Ein Ausführungsbeispiel der Erfindung ist in der Zeichnung dargestellt und wird im folgenden näher beschrieben. Es zeigen

Fig. 1 einen Teilbereich einer Anhängekupplung im Längsschnitt sowie eine pneumatische Schaltung,

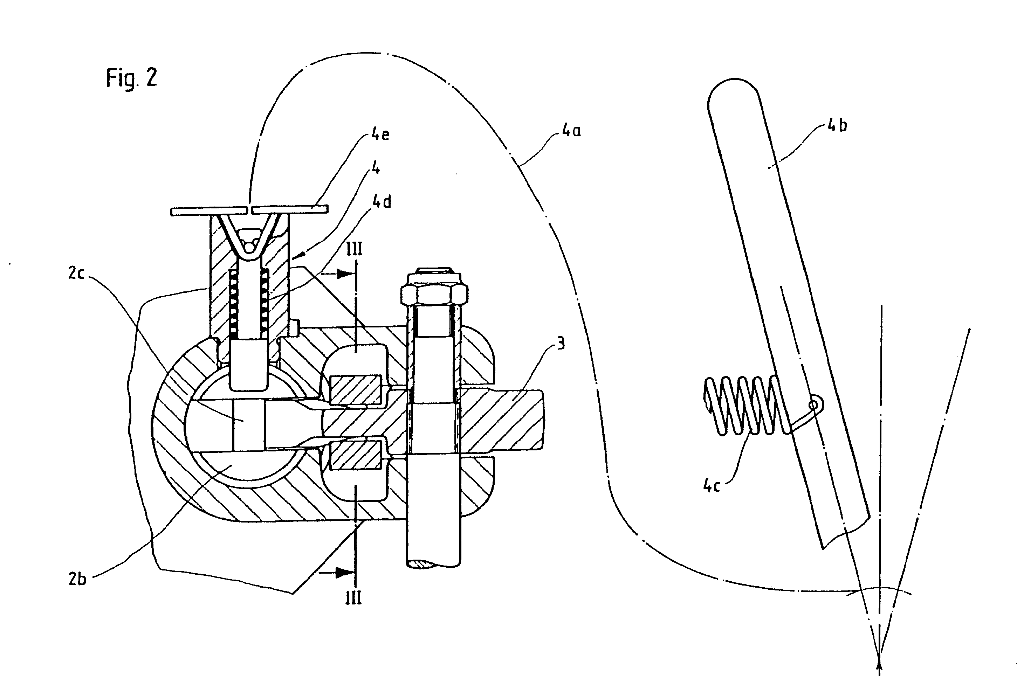

Fig. 2 den Schnitt nach der Linie II-II in Fig. 1 und zusätzlich einen fahrzeugseitig gelagerten Betätigungshebel,

Fig. 3 den Schnitt nach der Linie III-III in Fig. 2.

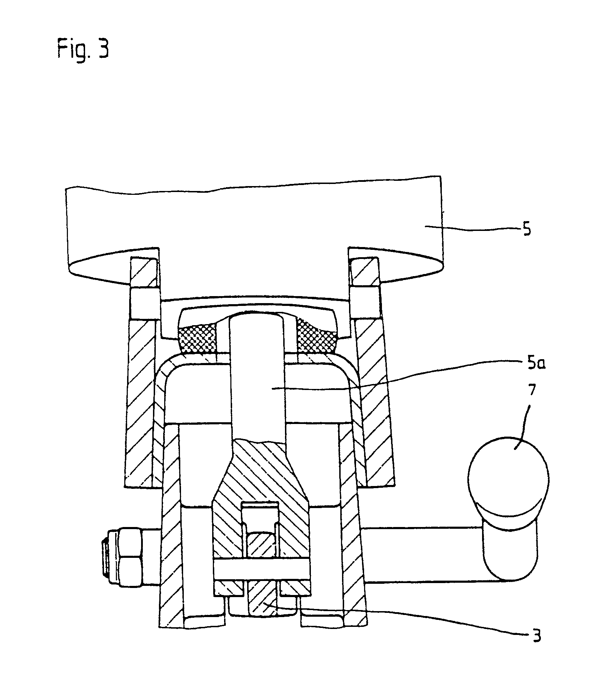

In einem Kuppelkopf 1 einer Anhängekupplung, der ein Kuppelmaul 1a aufweist, ist ein Kuppelbolzen 2 höhenverschiebbar gelagert. Ein unbeabsichtigtes Öffnen der Kupplung wird durch zwei unabhängig voneinander wirkende Sicherungen verhindert. Bei der 1. Sicherung liegt die Spitze 3a eines Sperr- und Betätigungshebels 3, der im übrigen mit einem in Fig. 3 gezeigten Handhebel 7 verbunden ist, in einer kerbenförmigen Rast 2a des Kuppelbolzens 2. Da der Kuppelbolzen 2 geradlinig geführt ist, der Sperr- und Betätigungshebel 3 sich jedoch um eine Drehachse 3b bewegt, ist ein Anheben des Kuppelbolzens 2 von der mit ihm zusammenwirkenden Zugöse her nicht möglich. Die 2. Sicherung wird durch einen federbelasteten Sicherungsriegel 4 gebildet, der mit der Oberseite 2b des Kuppelbolzens 2 zusammenarbeitet.

Um die Kupplung fernbetätigen zu können, greift an dem Sperr- und Betätigungshebel 3 (1. Sicherung) eine Kolbenstange 5a eines kupplungsseitig befestigten Pneumatikzylinders 5 an. Innerhalb des Pneumatikzylinders 5 ist eine nicht gezeigte Feder angeordnet, die die Kolbenstange 5a mit einer Kraft F in Richtung auf den Sperr- und Betätigungshebel 3 beaufschlagt. Der Sicherungsriegel 4 (2. Sicherung) ist über einen Seil- oder Bowdenzug 4a mit einem im hinteren Bereich des Fahrzeuges schwenkbar gelagerten Betätigungshebel 4b verbunden, der unter den Kräften der konzentrisch zum Sicherungsriegel 4 angeordneten Feder 4d sowie einer Weiteren Feder 4c in der dargestellten Raststellung ruht.

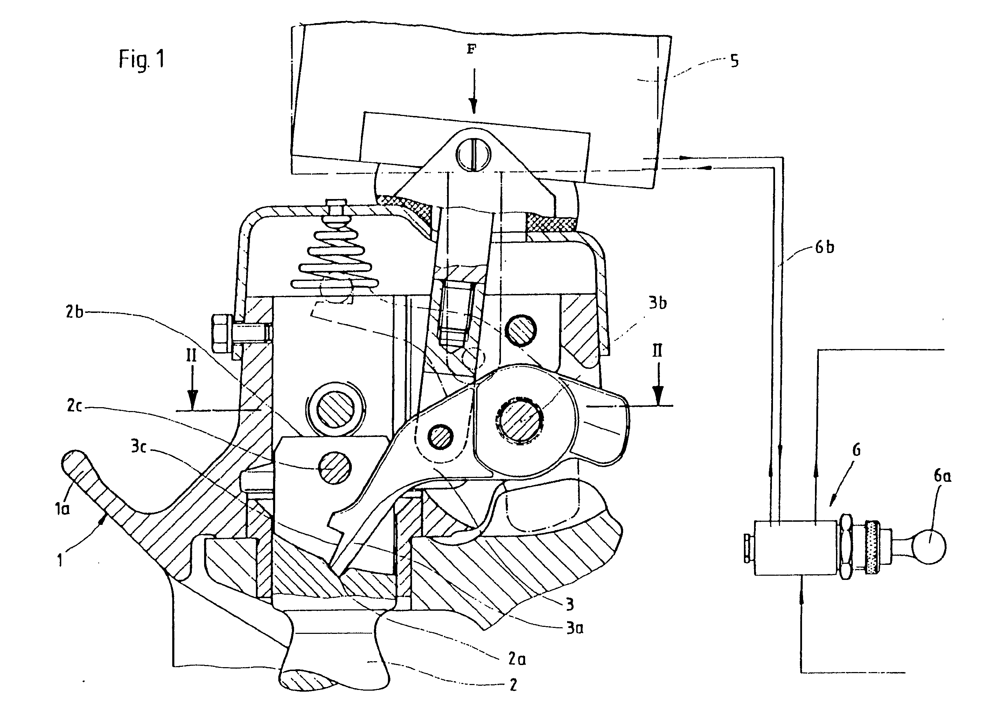

Das Öffnen der Kupplung geschieht auf folgende Weise : Der Betätigungshebel 4b wird aus seiner Raststellung bewegt, wodurch der Sicherungsriegel 4 aus dem Bereich des Kuppelbolzens 2 gelangt. Die 2. Sicherung ist also aufgehoben, solange der Betätigungshebel 4b gegen die Kraft der Federn 4c und 4d von Hand gehalten wird. Mit der freien Hand wird nunmehr, vorzugsweise durch Drehen eines Schlüssels 6a, ein 3/2-Wege-Ventil bedient, so daß Luft aus dem Luftsystem des Fahrzeuges (ca. 6 bar) über eine Verbindungsleitung 6b in den Pneumatikzylinder 5 strömt. Der Sperr- und Betätigungshebel 3 wird dadurch – unter Aufheben der 1. Sicherung – hochgezogen und nimmt den Kuppelbolzen 2 über dessen Sperrhebelstift 2c mit bis dieser Stift 2c (siehe die in Fig. 1 strichpunktierte obere Stellung) in eine Ausnehmung 3c des Sperr- und Betätigungshebels 3 eingreift. Die Anhängekupplung ist nun bereit zum Einführen der Zugöse ; Betätigungshebel 4b und Schlüssel 6a werden nunmehr losgelassen.

Das Schließen der Kupplung geschieht wie folgt: Der Kuppelbolzen 2 wird durch Einführen der Zugöse in das Kuppelmaul 1a angehoben bis der Sperrhebelstift 2c des Kuppelbolzens 2 den Sperr- und Betätigungshebel 3 freigibt. Der Hebel 3 und der Kuppelbolzen 2 gelangen nunmehr durch die Kraft der Feder innerhalb des Pneumatikzylinders 5 nach unten. Kurz vor Erreichen der unteren Endstellung schnappt der Sicherungsriegel 4 über die Oberseite 2b des Kuppelbolzens 2 (2. Sicherung), in der Endstellung greift die Spitze 3a des Sperr- und Betätigungshebels in die kerbenförmige Rast 2a des Kuppelbolzens 2 ein (1. Sicherung).

Das ordnungsgemäße Wirken der 2. Sicherung ist an der Raststellung des Betätigungshebels 4b kontrollierbar, anderenfalls muß der Kuppelvorgang wiederholt werden, weil der Kuppelbolzen 2 nicht seine untere Endstellung erreicht hat. Eine gesonderte Anzeige, beispielsweise eine Kontrolleuchte, ist entbehrlich. Die mechanisch-pneumatische Einrichtung zum Fernbetätigen der Anhängekupplung ist sicherheitstechnisch betrachtet von dem Medium Luft unabhängig. Denn sollte bei einem Defekt im Pneumatik-Kreislauf ungewollt Luft in den Zylinder 5 strömen, so ist ein Öffnen der Kupplung durch die 2. Sicherung zuverlässig verhindert.

Im übrigen ist die Kupplung auch bei Ausfall von Druckluft oder bei einem Riß des Seil- oder Bowdenzuges 4a durch den mit dem Sperr- und Betätigungshebel 3 verbundenen Handhebel 7 bzw. durch einen greifbaren Knopf 4e an dem Sicherungsriegel 4 bedienbar.

**Ansprüche**

1. Einrichtung zum Fernbetätigen einer automatischen Anhängekupplung, deren Kuppelbolzen (2) gegenüber einem unbeabsichtigten Anheben durch zwei unabhängig voneinander, jeweils formschlüssig wirkende Sicherungen arretiert ist, wobei die erste Sicherung durch eine kerbenförmige Rast (2a) des Kuppelbolzens (2) und einen bei geschlossener Kupplung in diese Rast (2a) eingreifenden Sperr- und Betätigungshebel (3) und die zweite Sicherung durch einen federbelasteten, mit der Oberseite (2b) des geschlossenen Kuppelbolzens (2) zusammenwirkenden Sicherungsriegel (4) gebildet sind, dadurch gekennzeichnet, daß der Sicherungsriegel (4) zum Aufheben seiner Wirkverbindung mit dem Kuppelbolzen (2) mit einer mechanischen Lösevorrichtung (4a, 4b) verbunden ist, wobei der Sperr- und Betätigungshebel (3) – nur bei gelöstem Sicherungsriegel (4) – durch einen pneumatischen Antrieb (5, 5a) aus seinem Eingriff in die kerbenförmige Rast (2a) des Kuppelbolzens (2) trennbar und unter Mitnahme des Kuppelbolzens (2) nach oben schwenkbar ist.

2. Einrichtung nach Anspruch 1, dadurch gekennzeichnet, daß der pneumatische Antrieb aus einem kupplungsseitig befestigten Zylinder (5) und einer an dem Sperr- und Betätigungshebel (3) angreifenden Kolbenstange (5a) besteht, wobei die Kolbenstange (5a) durch eine innerhalb des Zylinders (5) angeordnete Feder in Richtung auf den Sperr- und Betätigungshebel (3) beaufschlagt wird.

3. Einrichtung nach Anspruch 1 oder 2, dadurch gekennzeichnet, daß die mechanische Löseeinrichtung einen mit dem Sicherungsriegel (4) und einem fahrzeugseitig schwenkbar gelagerten Betätigungshebel (4b) verbundenen Seil- oder Bowdenzug (4a) aufweist.

**Claims**

1. A device for the remote control of an automatic trailer coupling, the coupling pin (2) of which is prevented from being unintentionally raised by two securing means acting independently of each other and in a non-positively locking manner in each case, the first securing means being formed by a notch-shaped catch (2a) of the coupling pin (2) and a locking and actuating lever (3) which engages in the said catch (2a) when the coupling is closed, and the second securing means being formed by a spring-loaded securing bolt (4) which cooperates with the top (2b) of the closed coupling pin (2), characterized in that the securing bolt (4) is connected to a mechanical release device (4a, 4b) for discontinuing its functional connexion with the coupling pin (2), the locking and actuating lever (3) being separable from its engagement in the notch-shaped catch (2a) of the coupling pin (2) and pivotable upwards with the entrainment of the coupling pin (2) by a pneumatic drive (5, 5a) – only when the securing bolt (4) is released.

2. A device according to Claim 1, characterized in that the pneumatic drive comprises a cylinder (5) connected to the coupling and a piston rod (5a) engaging with the locking and actuating lever (3), the piston rod (5a) being acted upon in the direction of the locking and actuating lever (3) by a spring arranged inside the cylinder (5).

3. A device according to Claim 1 or 2, characterized in that the mechanical release device has a line or Bowden cable (4a) connected to the securing bolt (4) and to an actuating lever (4b) pivotably mounted on the vehicle.

## Revendications

1. Dispositif pour commander à distance un attelage automatique de remorque, dont le pivot d'attelage (2) est arrêté à l'encontre d'un soulèvement involontaire par deux systèmes de verrouillage agissant respectivement par concordance de formes, indépendamment l'un de l'autre, le premier système de verrouillage étant formé par un cran (2a) du pivot d'attelage (2), en forme d'encoche, et par un levier de blocage et d'actionnement (3) qui pénètre dans ce cran (2a) lorsque l'attelage est enclenché, et le second système de verrouillage étant formé par un verrou d'arrêt (4) chargé élastiquement, qui coopère avec la face supérieure (2b) du pivot d'attelage enclenché (2), caractérisé par le fait que le verrou d'arrêt (4) est relié à un dispositif mécanique de dissociation (4a, 4b) en vue de supprimer sa liaison interactive avec le pivot d'attelage (2), le levier de blocage et d'actionnement (3) – uniquement lorsque le verrou d'arrêt (4) est dégagé – pouvant être libéré, par l'intermédiaire d'un entraînement pneumatique (5, 5a), de sa prise avec le cran (2a) en forme d'encoche du pivot d'attelage (2), et pouvant être animé d'un pivotement vers le haut en entraînant ledit pivot d'attelage (2).

2. Dispositif selon la revendication 1, caractérisé par le fait que l'entraînement pneumatique se compose d'un cylindre (5) fixé côté attelage, et d'une tige (5a) de piston venant en prise avec le levier de blocage et d'actionnement (3), la tige (5a) de piston étant sollicitée, par un ressort logé à l'intérieur du cylindre (5), en direction du levier de blocage et d'actionnement (3).

3. Dispositif selon la revendication 1 ou 2, caractérisé par le fait que le dispositif mécanique de dissociation présente une commande par câble ou commande Bowden (4a), reliée au verrou d'arrêt (4) et à un levier de manoeuvre (4b) monté pivotant côté véhicule.

Fig. 1

Fig. 2

EP 0 300 256 B1

Fig. 3